# EUROPÄISCHE PATENTSCHRIFT

(11) **EP 4 192 778 B1**
(45) Veröffentlichungstag und Bekanntmachung des Hinweises auf die Patenterteilung: **04.02.2026**
(21) Anmeldenummer: 22710069.0
(22) Anmeldetag: 03.03.2022
(51) Int. Cl.: B66C 9/08

(54) **RADSYSTEM, INSBESONDERE FÜR EINEN KRAN**
WHEEL SYSTEM, IN PARTICULAR FOR A CRANE
SYSTÈME DE ROUE, EN PARTICULIER POUR UNE GRUE

(30) Priorität: 08.03.2021 DE 102021105522
(43) Veröffentlichungstag der Anmeldung: 14.06.2023
(73) Patentinhaber: Konecranes Global Corporation, 05830 Hyvinkää (FI)
(72) Erfinder: HONG, Tony, Shanghai (CN); CHEN, Henry, Shanghai (CN); DÜLLMANN, Thomas, 58099 Hagen (DE); JANSEN, Gregor, 46244 Bottrop (DE); PIEPER, Lukas, 44795 Bochum (DE); EISING, Ralph, 44797 Bochum (DE); GREGER, Christoph, 44379 Dortmund (DE)
(74) Vertreter: Moser Götze & Partner Patentanwälte mbB
(86) Internationale Anmeldenummer: PCT/EP2022/055375
(87) Internationale Veröffentlichungsnummer: WO 2022/189245

(56) Entgegenhaltungen:
- CN-B- 107 720 543
- CN-U- 210 084 752
- JP-U- S5 228 865
- US-A1- 2004 250 613

## Beschreibung

Die Erfindung betrifft ein Radsystem gemäß dem Oberbegriff von Anspruch 1.

Ein derartiges als sogenannter Laufradblock ausgebildetes Radsystem ist beispielsweise aus der DE 10 2004 008 552 B3, der DE 19 540 217 C1 oder der DE 31 34 750 C2 bekannt. Infolge von Verschleiß an dem Laufrad eines solchen Radsystems, welches beispielsweise an einem Kran-Fahrwerksträger montiert ist, können Defekte und gegebenenfalls ein hierdurch resultierender Unfall entstehen. Um dies zu vermeiden, ist ein rechtzeitiger Austausch des verschlissenen Laufrades erforderlich. Eine Möglichkeit zur Überprüfung des Verschleißes besteht darin, dass das Radsystem demontiert und in seine Komponenten zerlegt wird. Anschließend kann das Laufrad bezüglich Verschleiß untersucht werden. Alternativ kann der Verschleiß über Markierungen untersucht werden, indem zunächst eine Markierung des Aufstandpunktes des Rades auf der Schiene an beiden Teilen vorgenommen wird. Anschließend wird eine Umdrehung des Rades veranlasst, um eine weitere Markierung auf der Schiene anzubringen und den Abstand zwischen den Markierungen zu messen. Hieraus erfolgt dann eine Ableitung des Radumfanges und Durchmessers und somit des etwaigen Verschleißes.

Aus der JP 2017 146 227 A ist ein Laufkran mit einem System zur Erkennung von Verschleiß an dessen Laufrädern bekannt. Das System umfasst zwei Laser-Entfernungsmesser, Reflektoren und eine Steuerung. Nachteil einer solchen Lösung ist ein vergleichsweise hoher Kosten- und Betriebsaufwand und eine vergleichsweise geringe Robustheit des Systems gegen mechanische Einflüsse, wie Vibrationen.

Eine mechanische Vorrichtung zur Erkennung von Verschleiß an Kranlaufrädern ist aus JP 2000-177 981 A bekannt. Die DE 10 2010 008 232 B4 betrifft Werkzeugwagen für eine Plattenbearbeitungsanlage und beschreibt in Bezug auf deren Räder die Erkennung und den Ausgleich von Verschleiß.

Die Erkennung von Verschleiß an Rädern ist zudem in DE 10 2019 210 884 A1, DE 10 2017 115 222 A1 und WO 2009/028776 A1 beschrieben.

Die CN 107 720 543 B beschreibt eine Vorrichtung zum Ausrichten von Kranlaufrädern.

In der JP S 52 28865 U ist der Einsatz von Kohle als Verschleißindikator für ein Kranlaufrad in Kombination mit einem Sichtfenster zum Ablesen des Verschleißes beschrieben.

Die CN 210 084 752 U offenbart den Einsatz einer Schutzabdeckung als Verschleißindikator für ein Laufrad.

Aus der US 2004/250613 A1 ist eine mechanische Vorrichtung zur Erkennung von Verschleiß an einem Reifen bekannt.

Ausgehend von diesem Stand der Technik liegt der vorliegenden Erfindung die Aufgabe zugrunde, eine vorausschauende Wartung eines gattungsgemäßen Radsystems bei geringem Überprüfungsaufwand zu ermöglichen.

Diese Aufgabe wird durch ein Radsystem mit den Merkmalen des Anspruchs 1 gelöst. Vorteilhafte Ausgestaltungen der Erfindung sind in den abhängigen Ansprüchen sowie der nachfolgenden Beschreibung angegeben.

Erfindungsgemäß wird bei einem Radsystem mit einem Laufrad und einem das Laufrad zumindest teilweise umschließenden Tragkörper, in dem das Laufrad gelagert ist und aus dem das Laufrad heraus ragt, um mit einer Schiene in Kontakt zu treten, eine vorausschauende Wartung bei geringem Überprüfungsaufwand dadurch ermöglicht, dass eine mechanische Vorrichtung zur Erkennung und/oder Ermittlung von Verschleiß an dem Laufrad am Tragkörper gelagert ist. Vorzugsweise ist hierbei die mechanische Vorrichtung derart beweglich am Tragkörper gelagert, dass sie zur Erkennung und/oder Ermittlung von Verschleiß am Laufrad in Kontakt mit dem Laufrad gebracht werden kann, und hierfür insbesondere an einer Lauffläche des Laufrades zur Anlage gebracht werden kann. Vorzugsweise wird hierfür ein beweglicher Teil der mechanischen Vorrichtung aus einer vom Laufrad entfernten Bereitschaftsstellung heraus in Kontakt mit dem Laufrad gebracht.

Die mechanische Vorrichtung ist also in den Tragkörper integriert. Das Radsystem und insbesondere dessen Laufrad kann durch eine Antriebseinheit, insbesondere mit einem Elektromotor, angetrieben sein. Das erfindungsgemäße Radsystem ist optional für einen Kran verwendbar, insbesondere einen Laufkran, der typischerweise schienengebunden verfahrbar ist, wobei das Laufrad des Radsystems als eines von mehreren Laufrädern des Krans mit der jeweiligen Schiene in Kontakt ist und auf dieser abrollt.

Das in dem Tragkörper gelagerte Laufrad ist um eine in üblicher Einbaulage des Laufrads horizontal ausgerichtete Drehachse drehbar. Das Laufrad ist vorzugsweise mittels einer Nabe gelagert, welche seitlich jeweils in einem Gleit- und/oder Wälzlager, die in den Tragkörper eingesetzt sind, gehalten wird.

Mittels der am Tragkörper gelagerten und somit in das Radsystem integrierten und permanent vorhandenen mechanischen Vorrichtung ist der Verschleiß des Laufrades in einem eingebauten Zustand des Laufrads erkennbar und/oder ermittelbar. Weder eine Demontage des Radsystems, insbesondere ein Ausbau des Laufrads, noch ein vom Radsystem getrenntes, separates Messinstrument sind hierfür erforderlich. Die mechanische Vorrichtung ist hierbei vorzugsweise so eingerichtet, dass sie diskontinuierlich arbeitet und zur Erkennung und/oder Ermittlung von Verschleiß an dem Laufrad manuell betätigt werden muss. Ohne manuelle Betätigung erfolgt dementsprechend keine Erkennung und/oder Ermittlung von Verschleiß an dem Laufrad.

Erkennung oder erkennbar bedeutet im Rahmen der Erfindung, dass identifizierbar ist, dass Verschleiß des Laufrades vorliegt. Ermittlung oder ermittelbar bedeutet im Rahmen der Erfindung, dass der Verschleiß des Laufrades quantifizierbar und somit bezifferbar ist.

Die mechanische Vorrichtung erlaubt ein gegenüber einer sensorbasierten Systemlösung, wie sie beispielsweise aus der JP 2017 146 227 A bekannt ist, eine robuste und kostengünstige Lösung zur frühzeitigen Erkennung von Verschleiß während des Betriebes. Es ist kein steuerungstechnischer Aufwand erforderlich. Somit ist eine vorausschauende Wartung des Radsystems, insbesondere des Laufrades, in einfacher Weise möglich.

Erfindungsgemäß ist außerdem vorgesehen, dass die mechanische Vorrichtung einen Fühler aufweist, welcher in Kontakt mit dem Laufrad bringbar ist, um zur Erkennung und/oder Ermittlung von Verschleiß an einer Lauffläche des Laufrades anzuliegen. Dabei weist der Fühler vorzugsweise ein freies Ende auf, welches vorzugsweise aus einer vom Laufrad entfernten Bereitschaftsstellung in Kontakt mit dem Laufrad gebracht wird. Im Gegensatz zu berührungslosen, beispielsweise optischen, Sensoren, ertastet der Fühler also kontaktbehaftet etwaigen Verschleiß am Laufrad.

Im Rahmen der diskontinuierlichen Funktionsweise besteht folglich kein dauerhafter Kontakt des Fühlers mit dem Laufrad. Der Kontakt mit dem Laufrad zur Erkennung und/oder Ermittlung von Verschleiß an dem Laufrad muss durch eine manuelle Betätigung der mechanischen Vorrichtung ausgelöst werden. Hierfür kann ein mit dem Fühler gekoppeltes und außen am Tragkörper von einer Bedienperson erreichbares Betätigungselement vorgesehen sein. Solange keine Betätigung erfolgt, kann sich der Fühler in der vom Laufrad entfernten Bereitschaftsstellung befinden. Durch diese diskontinuierliche Funktionsweise der mechanischen Vorrichtung wird eine weitere Verschleißstelle am Fühler und/oder am Laufrad vermieden.

Die Lauffläche ist am Umfang des Laufrades angeordnet und dient insbesondere dem Kontakt zwischen dem Laufrad und einer Schiene. Beim Verfahren des Laufrades tritt an der Lauffläche Verschleiß auf.

Der Fühler ist steif und formstabil und weist eine zum wiederholgenauen Anliegen am Laufrad geeignete Form auf, beispielsweise eine längliche Form. Hierfür kann der Fühler beispielsweise aus einem Blech, insbesondere Aluminiumblech, oder einem Kunststoff hergestellt sein.

In konstruktiv einfacher Weise umfasst die mechanische Vorrichtung erfindungsgemäß zudem eine optische Anzeige, welche außerhalb des Tragkörpers angeordnet ist. Die Anzeige ist derart ausgebildet und mit dem Fühler verbunden, dass sie das Ergebnis der Erkennung und/oder Ermittlung des Verschleißes visualisieren kann.

Dadurch ist eine außerhalb des Radsystems sichtbare Anzeige des Verschleißzustandes gegeben. Hierdurch wird einer Bedienperson ermöglicht, das Ergebnis der Erkennung und/oder Ermittlung des Verschleißes wahrzunehmen, ohne dass ein Öffnen oder Zerlegen des Radsystems in seine Komponenten erforderlich ist.

Besonders vorteilhaft ist erfindungsgemäß vorgesehen, dass die optische Anzeige einen Zeiger umfasst, welcher mit dem Fühler über ein Verbindungselement, insbesondere mittels eines Stabes oder Stiftes, starr verbunden ist und einen beweglichen Teil der mechanischen Vorrichtung ausbildet. Der Zeiger kann zugleich als Betätigungselement dienen, um durch dessen Betätigung den Fühler in Kontakt mit dem Laufrad zu bringen.

Der bewegliche Teil der mechanischen Vorrichtung umfasst also den Fühler und den Zeiger.

Für den Fall, dass eine Ermittlung des Verschleißes vorgesehen ist, umfasst die optische Anzeige eine Skala, welche insbesondere an einer Außenfläche des Tragkörpers angeordnet ist. Die Skala kann zwei oder mehr Ablesepunkte, welche gegebenenfalls mit einer vorbestimmten Bezeichnung für den jeweiligen Verschleißgrad versehen sind, aufweisen. Der Zustand des Laufrades und dessen Verschleiß sind dann bei an dem Laufrad anliegendem Fühler über ein Ablesen mittels der Skala und der Lage des Zeigers relativ hierzu bestimmbar.

Für den Fall, dass eine Erkennung des Verschleißes vorgesehen ist, ist hingegen lediglich eine einzige Markierung an der Außenfläche des Tragkörpers erforderlich. Mittels der Markierung ist beispielsweise eine einen bestimmten Verschleißgrad repräsentierende Lage des Zeigers oder eine Lageveränderung des Zeigers gegenüber einer bekannten verschleißfreien Ausgangslage bei jeweils am Laufrad anliegendem Fühler identifizierbar. In einer besonders einfachen Umsetzung ist somit beispielsweise eine einzelne Kerbe außen am Gehäuse ausreichend.

Eine Verbindung zwischen dem Zeiger und dem Fühler ist vorzugsweise lösbar und formschlüssig und/oder kraftschlüssig ausgebildet. Je nach geometrischer Auslegung des Fühlers und des Zeigers kann der bewegliche Teil auch ein beispielsweise als Stab oder Stift ausgebildetes Verbindungselement umfassen, welches zwischen dem Fühler und dem Zeiger angeordnet ist und diese vorzugsweise lösbar und starr verbindet.

Die Verbindung zwischen dem Fühler und dem Verbindungselement ist dann vorzugsweise lösbar und insbesondere formschlüssig und/oder kraftschlüssig ausgebildet. Hierzu kann das Verbindungselement ein Gewinde aufweisen, an dem der Fühler gehalten und in axialer Richtung fixiert werden kann, beispielsweise mittels zwei, insbesondere gekonterter, Muttern. Die Verbindung zwischen dem Zeiger und dem Verbindungselement ist dann vorzugsweise lösbar und insbesondere formschlüssig und/oder kraftschlüssig ausgebildet.

Eine Veränderung der Position beziehungsweise Ausrichtung des am Laufrad anliegenden Fühlers, welche, vorzugsweise ausschließlich, durch den Verschleiß am Laufrad induziert ist, wird aufgrund der starren Verbindung direkt an den Zeiger übertragen. Mit anderen Worten bewegt sich der Zeiger in gleichem Ausmaß, insbesondere Drehwinkel, wie der Fühler. Eine gleiche Ausrichtung von Fühler und Zeiger ist nicht erforderlich.

Da der Zeiger außerhalb des Tragkörpers angeordnet ist und der Fühler innerhalb, ist für den beweglichen Teil der mechanischen Vorrichtung eine Öffnung in einer Seitenwand des Gehäuses erforderlich, durch welche das Verbindungselement geführt ist.

Unter dem Zeiger wird ein in sich steifes und formstabiles Element verstanden, welches zu einer Anzeige geeignet ist und hierzu insbesondere ein als "Spitze" ausgebildetes freies Ende hat. Eine Form des Zeigers ist frei wählbar.

In vorteilhafter Weise ist der bewegliche Teil der mechanischen Vorrichtung an dem Tragkörper drehbar und/oder translatorisch beweglich gelagert. Insbesondere ist hierbei das Verbindungselement, also beispielsweise der Stab oder Stift, an dem Tragkörper drehbar und/oder translatorisch beweglich gelagert. Bei translatorisch beweglicher Lagerung erfolgt die translatorische Bewegung vorzugsweise parallel zur Drehachse des Laufrads. Durch die drehbare Lagerung wird von dem Verbindungselement eine Drehachse der mechanischen Vorrichtung, insbesondere für den Fühler und den Zeiger und damit für den beweglichen Teil der mechanischen Vorrichtung, gebildet. Drehungen erfolgen dementsprechend um eine Längsachse des Verbindungselements. Der Fühler und der Zeiger sind dabei vorzugsweise derart angeordnet und ausgerichtet, dass diese sich von der Drehachse jeweils quer, insbesondere rechtwinklig, nach Art eines Uhrzeigers weg erstrecken. Es ist möglich, dass sich der Fühler und der Zeiger dabei in unterschiedliche Richtungen erstrecken.

Gemäß einer besonders einfachen Ausgestaltung kann vorgesehen sein, dass ohne manuelle Betätigung der mechanischen Vorrichtung der Kontakt zwischen dem Fühler und dem Laufrad allein über die Schwerkraft aufgehoben wird und der Fühler schwerkraftgetrieben in die Bereitschaftsstellung bewegt wird. Hierzu sind das Verbindungselement und der Fühler entsprechend auszulegen und in Bezug auf das Laufrad an dem Tragkörper anzuordnen.

Vorteilhaft kann alternativ oder zusätzlich vorgesehen sein, dass der bewegliche Teil der mechanischen Vorrichtung gegenüber dem Tragkörper arretierbar ist, um den Fühler in der vom Laufrad entfernten Bereitschaftsstellung zu halten, insbesondere sobald die manuelle Betätigung endet.

Die Arretierung kann beispielsweise formschlüssig erfolgen, wobei durch eine manuelle Betätigung und dadurch bewirkte Bewegung des beweglichen Teils ein Formschluss zwischen dem beweglichen Teil und einer vorzugsweise am Tragkörper angeordneten Aufnahme hergestellt wird. Die Aufnahme korrespondiert hinsichtlich ihrer Form mit einer entsprechenden Kontur des beweglichen Teils, beispielsweise des Verbindungselements.

Alternativ oder zusätzlich kann die Arretierung kraftschlüssig erfolgen, insbesondere mittels mindestens eines Federelements der mechanischen Vorrichtung, wobei ohne manuelle Betätigung, also insbesondere beim Beenden einer zuvor erfolgten manuellen Betätigung, ein Kraftschluss zwischen dem beweglichen Teil und dem Tragkörper hergestellt wird. Hierfür kann beispielsweise mittels des Federelements der bewegliche Teil, insbesondere dessen Verbindungselement, in axialer Richtung gegenüber dem Tragkörper gespannt werden.

Der arretierte Zustand, insbesondere der Formschluss und/oder Kraftschluss, des beweglichen Teils kann durch eine Betätigung der mechanischen Vorrichtung, insbesondere des Betätigungselements, aufgehoben werden, um die Bereitschaftsstellung verlassen und anschließend den Kontakt zwischen dem Fühler und dem Laufrad herstellen zu können. Bei formschlüssiger Arretierung ist hierfür durch manuelle Betätigung eine entgegengesetzte Bewegung des beweglichen Teils aus der Aufnahme heraus erforderlich. Bei kraftschlüssiger Arretierung ist hierfür durch manuelle Betätigung eine Bewegung entgegen der Haltekraft der kraftschlüssigen Arretierung, insbesondere der entsprechenden Federkraft, erforderlich.

Besonders vorteilhaft ist eine Kombination einer formschlüssigen und kraftschlüssigen Arretierung. Hierbei stellt der Kraftschluss, beispielsweise also mittels des mindestens einen Federelements, sicher, dass der hergestellte Formschluss aufrechterhalten bleibt, sobald die Betätigung durch die Bedienperson endet. Dementsprechend ist durch eine manuelle Betätigung zunächst der Kraftschluss aufzuheben, um anschließend auch den Formschluss und damit die Arretierung vollständig aufheben und die Bereitschaftsstellung verlassen zu können.

In einer optionalen Ausgestaltung kann vorgesehen sein, dass der Tragkörper als Gehäuse ausgebildet ist, das mehrere, vorzugsweise fünf, das Laufrad umschließende Seitenwände aufweist.

Gemäß einer weiteren Ausführungsform des Radsystems kann der Tragkörper Teil, insbesondere tragendes Strukturteil, eines Fahrwerksträgers sein. Der Fahrwerksträger selbst hat dadurch eine Gehäusefunktion für das Laufrad und die im Tragkörper angeordneten Komponenten der mechanischen Vorrichtung zur Erkennung und/oder Ermittlung von Verschleiß an dem Laufrad, insbesondere den Fühler und das Verbindungselement sowie das/die optionale(n) Federelement(e).

Gemäß einer weiteren Ausführungsform kann der Tragkörper eine Anschlussfläche aufweisen, um hierüber an einen Fahrwerksträger angeschlossen, das heißt montiert, zu werden. Der Tragkörper kann somit auch als vom Fahrwerksträger separates und lösbar hieran befestigbares Gehäuse ausgebildet sein. Selbstverständlich können weitere Anschlussflächen vorgesehen sein, beispielsweise zum Anschluss einer Antriebseinheit für das Laufrad. Die Anschlussfläche kann hierbei jeweils mittels einer Schraub- oder Bolzenverbindung an einer Gegenfläche zur Anlage gebracht werden, um den entsprechenden Anschluss, beispielsweise an den Fahrwerksträger oder der Antriebseinheit, herzustellen. Für die Schraub- oder Bolzenverbindung sind entsprechende Anschlussbohrungen vorgesehen, in welche dann entsprechende Schrauben oder Bolzen eingreifen.

Insbesondere kann der Tragkörper als kastenförmiges Gehäuse ausgebildet sein, das an seiner Unterseite offen ist, wobei das Laufrad dort dann durch eine Öffnung heraus ragt. In diesem Fall wird das Radsystem auch als Laufradblock bezeichnet. Das Gehäuse kann hierbei aus mehreren Teilen zusammengesetzt sein, vorzugsweise aus zwei gleichen Gehäusehälften, wodurch sich ein entsprechend symmetrischer Aufbau des Gehäuses ergibt.

Das Gehäuse kann dann an einer der Unterseite gegenüberliegenden Seite eine auch als Kopfanschlussfläche bezeichnete Anschlussfläche aufweisen, welche verwendet wird, um das Radsystem beziehungsweise den Laufradblock beispielsweise an einem Fahrwerksträger eines Krans anzuschließen.

Erfindungsgemäß wird zudem ein Kran, insbesondere Laufkran, insbesondere Brückenkran oder Portalkran, dadurch verbessert, dass dieser ein erfindungsgemäßes Radsystem umfasst. Die für das Radsystem beschriebenen Vorteile gelten für den Kran entsprechend.

Der Fahrwerksträger kann sowohl bei einem Kran als auch bei anderen Anwendungen beispielsweise als T-Träger, Doppel-T-Träger, Kasten-Träger, L-Profil-Träger oder C-Profil-Träger ausgebildet sein. An einem einzigen Fahrwerksträger können mehrere Radsysteme angeordnet sein. Bei zwei Radsystemen sind diese insbesondere in einer Laufrichtung der Laufräder hintereinander angeordnet. Selbstverständlich ist es denkbar, dass die Radsysteme auch bezüglich der Laufrichtung der Laufräder nebeneinander angeordnet sind. Auch eine Kombination aus beidem ist möglich.

Im Falle einer Krananwendung kann der Fahrwerksträger an einer Brücke eines Laufkrans oder einer Stütze eines Portalkrans und/oder einer Kranlaufkatze des Laufkrans oder Portalkrans angeordnet sein. Selbstverständlich ist das erfindungsgemäße Radsystem auch an anderen Krantypen einsetzbar.

Weitere Details der Erfindung ergeben sich aus der nachfolgenden Beschreibung von Ausführungsbeispielen anhand der Zeichnung, in der
Figur 1 eine schematische perspektivische Ansicht eines Laufkrans,
Figur 2a eine schematische perspektivische und ausschnittsweise Schnittansicht eines als Laufradblock ausgebildeten Radsystems mit einer mechanischen Vorrichtung zur Erkennung und/oder Ermittlung von Verschleiß an einem Laufrad des Laufradblocks,
Figur 2b einen vergrößerten Ausschnitt aus Figur 2a,
Figuren 2c und 2d schematische perspektivische und ausschnittsweise Schnittansichten eines als Laufradblock ausgebildeten Radsystems mit einer mechanischen Vorrichtung zur Erkennung und/oder Ermittlung von Verschleiß an einem Laufrad des Laufradblocks mit unterschiedlichen Verschleißgraden und
Figuren 3a bis 3f jeweils eine Seitenansicht eines als Laufradblock ausgebildeten Radsystems mit einer optischen Anzeige zur Erkennung und/oder Ermittlung von Verschleiß an dem Laufrad des Laufradblocks zeigen.

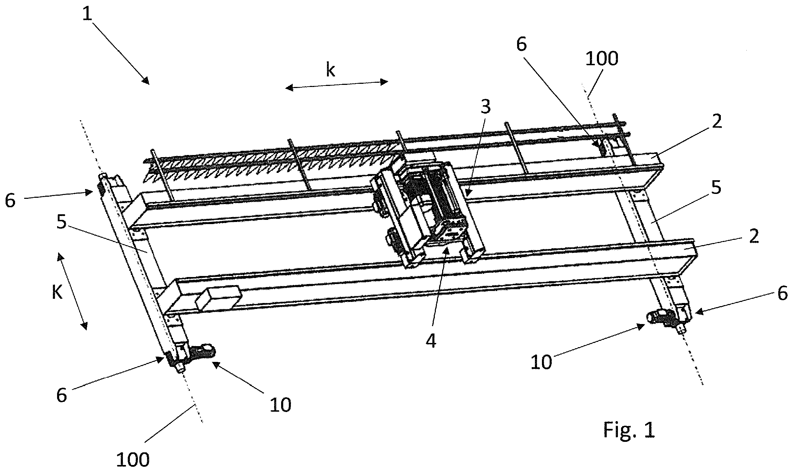

Die Figur 1 zeigt eine schematische perspektivische Ansicht eines Laufkrans 1, der hier beispielhaft als sogenannter Zwei-Träger-Brückenkran ausgebildet ist. Der Laufkran 1 ist auf einem Schienenweg mit zwei zueinander parallelen und voneinander beabstandeten, auch als Laufradbahn bezeichneten, Schienen 100 (schematisch durch strichpunktierte Linien angedeutet) im Wesentlichen horizontal in einer Kranfahrrichtung K verfahrbar.

Der Laufkran 1 umfasst zwei parallel und mit Abstand zueinander verlaufende Kastenträger 2, die beispielhaft einen horizontalen Kranträger ausbilden und als Fahrweg für eine Laufkatze 3 mit einem Hebezeug 4 dienen. Hierbei verfährt die Laufkatze 3 auf den Kastenträgern 2 in einer horizontalen Katzfahrrichtung k, die rechtwinklig zur Kranfahrrichtung K ausgerichtet ist. Entsprechend erstrecken sich die Kastenträger 2 ebenfalls in Katzfahrrichtung k. Alternativ kann auch nur ein einzelner Kastenträger oder Doppel-T-Profil nach Art eines Ein-Träger-Brückenkrans vorgesehen sein. Die Laufkatze 3 verfährt dann beispielsweise an einem Untergurt des Kastenträgers. Zur Ausbildung des jeweiligen Kranträgers können Fachwerkträger anstelle von Kastenträgern eingesetzt werden.

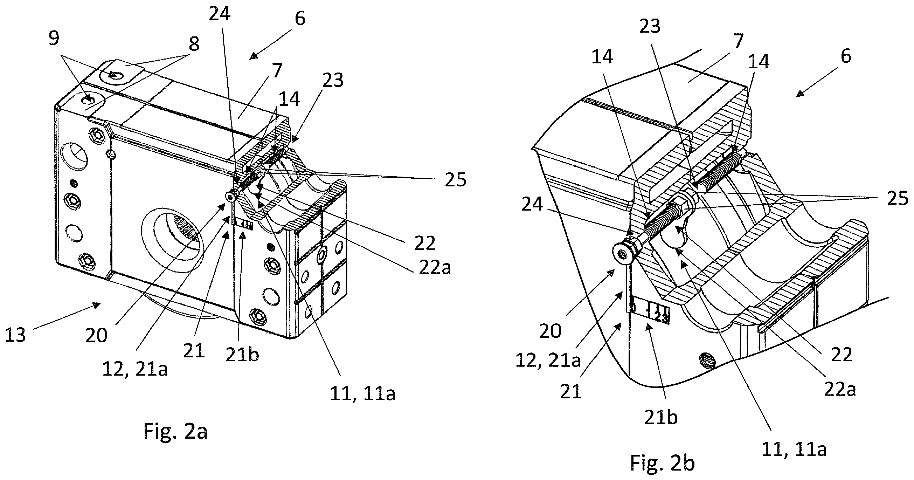

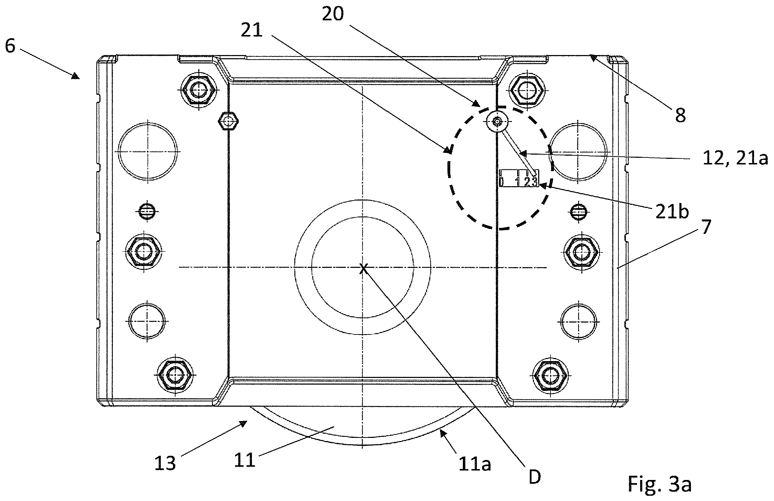

Die Kastenträger 2 liegen an ihren jeweiligen, gegenüberliegenden Enden auf quer dazu und somit in Kranfahrrichtung K verlaufenden Fahrwerksträgern 5 auf. An den gegenüberliegenden Enden der Fahrwerksträger 5 ist jeweils ein als Laufradblock 6 ausgebildetes Radsystem angeordnet, von denen je Fahrwerksträger 5 mindestens einer der beiden Laufradblöcke 6 durch einen Elektromotor 10 angetrieben ist. Die Laufradblöcke 6 sind jeweils mit ihrem Laufrad 11 (siehe Figuren 2a und 2b sowie 3a bis 3f) auf den Schienen 100 in Kranfahrrichtung K verfahrbar. Selbstverständlich sind die Laufradblöcke 6 auch an anderen Krantypen einsetzbar.

Die Figur 2a zeigt eine schematische perspektivische und ausschnittsweise Schnittansicht eines exemplarisch als Laufradblock 6 ausgebildeten Radsystems mit einer mechanischen Vorrichtung 20 zur Erkennung und/oder Ermittlung von Verschleiß an dem Laufrad 11 des Laufradblocks 6. Einen vergrößerten Ausschnitt aus Figur 2a zeigt Figur 2b.

Das als Laufradblock 6 ausgebildete Radsystem weist einen Tragkörper in Form eines beispielhaft kastenförmigen Gehäuses 7 (siehe auch Figuren 3a bis 3f) auf, welches aus zwei gleichen Gehäusehälften zusammengesetzt ist. An der Oberseite des Gehäuses 7 ist eine Anschlussfläche 8 vorgesehen, von deren insgesamt vier Anschlussbohrungen 9 aufgrund der ausschnittsweisen Ansicht nur zwei dargestellt sind. Bei einer Montage des Laufradblocks 6 an dem Fahrwerksträger 5 kommt die Anschlussfläche 8 zur Anlage an einer Gegenfläche an dem Fahrwerksträger 5, um hieran über in die Anschlussbohrungen 9 eingreifende Schrauben oder Bolzen befestigt zu werden.

In dem Gehäuse 7 ist das Laufrad 11 angeordnet, welches um eine Drehachse D (siehe Figur 3a bis 3f) drehbar in dem Gehäuse 7 gelagert und hierbei von dem Tragkörper, insbesondere Gehäuse 7, teilweise umschlossen ist. Das Laufrad 11 weist an seinem Umfang eine Lauffläche 11a auf, welche im Betrieb mit den Schienen 100 (siehe Figur 1) in Kontakt steht.

Die mechanische Vorrichtung 20 ist im oberen Bereich des Gehäuses 7 und derart zu dem Laufrad 11 beabstandet angeordnet und in dem Gehäuse 7 gelagert, dass ein Fühler 22 der mechanischen Vorrichtung und insbesondere dessen freies Ende 22a aus einer vom Laufrad 11 entfernten Bereitschaftsstellung mit der Lauffläche 11a in Kontakt gebracht werden kann, damit es wie in Figur 2a und 2b dargestellt daran anliegt.

Der Fühler 22 ist über zwei Muttern 25 an einem beispielhaft als Stift 23 ausgebildeten Verbindungselement, welches hierzu ein Gewinde aufweist, lösbar befestigt. Die zwei Muttern 25 sind hierzu an gegenüberliegenden Seiten des Fühlers 22 angeordnet und gegeneinander gekontert.

Um den Kontakt des Fühlers 22 mit dem Laufrad 11 zur Erkennung und/oder Ermittlung von Verschleiß an dem Laufrad 11 durch eine manuelle Betätigung der mechanischen Vorrichtung herstellen zu können, ist ein mit dem Fühler 22 über den Stift 23 gekoppeltes und außen am Gehäuse 7 von einer Bedienperson erreichbares Betätigungselement 12 vorgesehen.

Der Stift 23 ist an dem Gehäuse 7 drehbar und translatorisch beweglich gelagert. Zudem ist der Stift 23 mittels mindestens eines Federelements 14, vorliegend beispielhaft mittels zwei Federelementen 14, in axialer Richtung gegenüber dem Gehäuse 7 gespannt und kann zugleich formschlüssig in einer Aufnahme derart am Gehäuse 7 arretiert werden, dass der Fühler 22 hierdurch in der Bereitschaftsstellung gehalten wird. Durch eine manuelle Betätigung der mechanischen Vorrichtung 20, die eine Bewegung des Stifts 23 in axialer Richtung entgegen der Federkraft bewirkt, kann der Formschluss mit der Aufnahme aufgehoben werden, wodurch anschließend der Stift 23 rotiert werden kann, um den Kontakt zwischen dem Fühler 22 und der Lauffläche 11a herzustellen.

An dem als Verbindungselement dienenden Stift 23 ist zusätzlich zum Fühler 22 auch ein Zeiger 21a einer optischen Anzeige 21 zur Erkennung und/oder Ermittlung von Verschleiß an dem Laufrad 11 des Laufradblocks 6 (siehe auch Figuren 3a bis 3f) befestigt, der zugleich als das Betätigungselement 12 dient. Zusammen mit dem Fühler 22 und dem Stift 23 bildet der Zeiger 21a einen beweglichen Teil der mechanischen Vorrichtung 20 aus, der insbesondere aufgrund der beschriebenen Lagerung des Stiftes 23 drehbar und translatorisch beweglich am Gehäuse 7 gelagert und mittels der Aufnahme gegenüber dem Gehäuse 7 arretierbar ist.

Der Zeiger 21a ist außerhalb des Gehäuses 7 angeordnet. Hierzu ist der Stift 23 durch eine Öffnung 24 in einer Seitenwand des Gehäuses 7 geführt. Der Zeiger 21a dient der Erkennung und/oder Ermittlung von Verschleiß an dem Laufrad 11 auch während dieses in dem Laufradblock 6 verbaut ist.

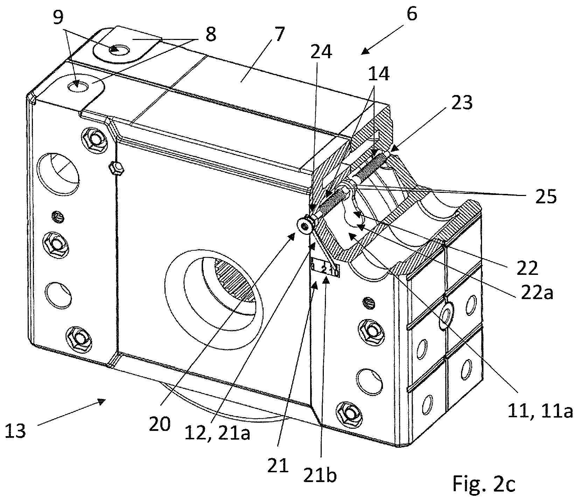

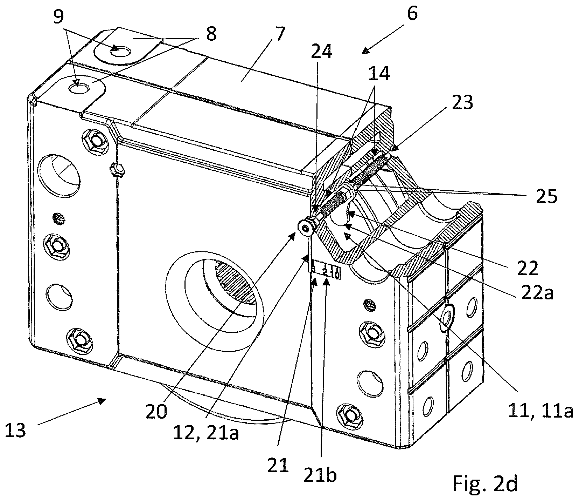

Die Figuren 2c und 2d zeigen schematische perspektivische und ausschnittsweise Schnittansichten eines als Laufradblock 6 ausgebildeten Radsystems mit einer mechanischen Vorrichtung 20 zur Erkennung und/oder Ermittlung von Verschleiß an einem Laufrad 11 des Laufradblocks 6 mit unterschiedlichen Verschleißgraden. Hierbei ist der Verschleiß des Laufrads 11 in Figur 2d größer als in Figur 2c, weshalb der mit dem Laufrad 11 in Kontakt gebrachte Fühler 22, insbesondere dessen freies Ende 22a, am Kontaktpunkt mit dem Laufrad 11 von der Drehachse des Laufrads 11 in Figur 2d weniger weit beabstandet ist als in Figur 2c. Entsprechendes wird von der Anzeige 21 und deren Zeiger 21a angezeigt, wie nachfolgend noch näher erläutert wird. Im Übrigen gelten die Ausführungen zu den Figuren 2a und 2b auch für das Radsystem der Figuren 2c und 2d.

Die Figuren 3a bis 3f zeigen jeweils eine Seitenansicht eines als Laufradblock 6 ausgebildeten Radsystems mit einer optischen Anzeige 21 zur Erkennung und/oder Ermittlung von Verschleiß an dem Laufrad 11 des Laufradblocks 6, wie sie auch in den Beispielen der Figuren 2a bis 2d vorhanden sein können und dort exemplarisch dargestellt sind.

Das Gehäuse 7 ist an seiner Unterseite 13 offen, wobei das Laufrad 11 durch eine Öffnung teilweise heraus ragt. Das Laufrad 11 ist mittels einer Nabe (nicht sichtbar) gelagert. Die Nabe wird seitlich jeweils in einem Gleit- und/oder Wälzlager (nicht sichtbar) gehalten, die in das Gehäuse 7 eingesetzt sind. Das Laufrad 11 ist um eine quer zur Kranfahrtrichtung K verlaufende Drehachse D drehbar. Bei üblicher Einbaulage ist die Drehachse D horizontal ausgerichtet.

Die optische Anzeige 21 gehört zur mechanischen Vorrichtung 20, wie sie in Zusammenhang mit Figur 2a und 2b in einer beispielhaften Ausführungsform beschrieben ist. Die optische Anzeige 21 umfasst den Zeiger 21a sowie eine Skala 21b, mittels welcher der Verschleiß des Laufrades 11 erkennbar und ermittelbar ist. Die Skala 21b hat beispielhaft jeweils vier Ablesepunkte, welche mit einer vorbestimmten Bezeichnung für den jeweiligen Verschleißgrad (hier Zahlen "0", "1", "2", "3") versehen sind.

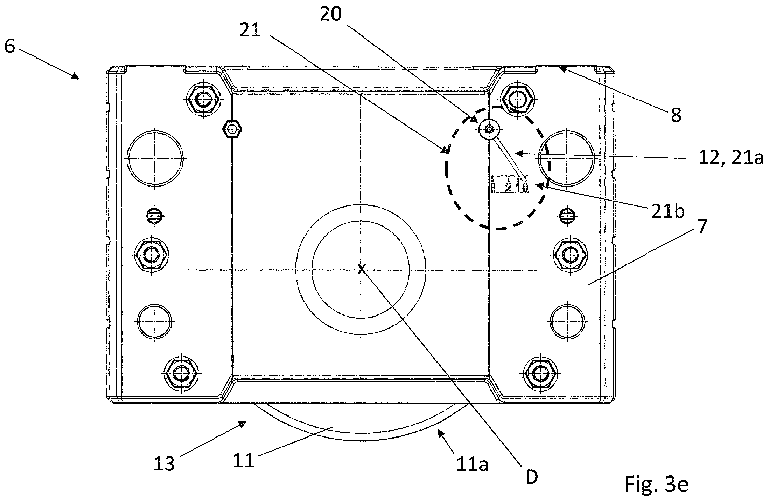

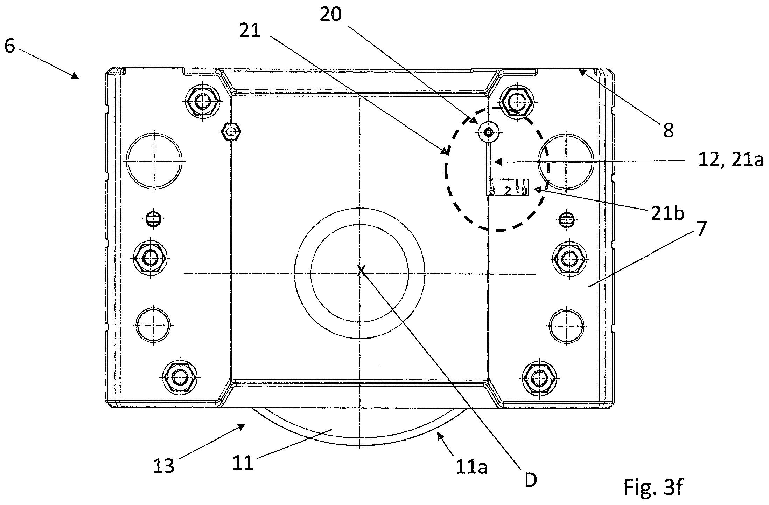

Bei den vorliegenden Beispielen können die Anzeige 21 und insbesondere der Zeiger 21a und die Ablesepunkte so eingerichtet sein, dass bei zunehmendem Verschleiß die vom Zeiger 21a angezeigte Zahl größer wird und somit einen größer werdenden Verschleiß repräsentiert (Figuren 2c und 2d sowie 3e und 3f) oder kleiner wird und somit einen kleiner werdenden Umfang des Laufrads 11 repräsentiert (Figuren 2a und 2b sowie 3a bis 3d). Selbstverständlich kann die Skala 21b auch eine andere Anzahl an Ablesepunkten und/oder andere Bezeichnungen für den mindestens einen Ablesepunkt aufweisen.

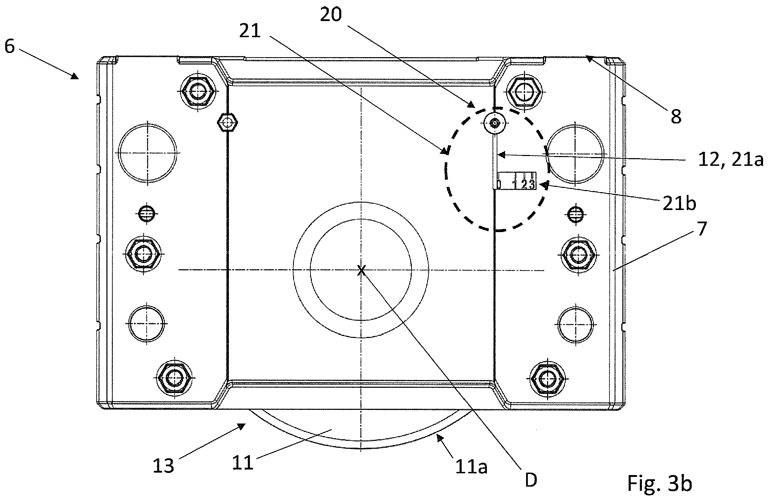

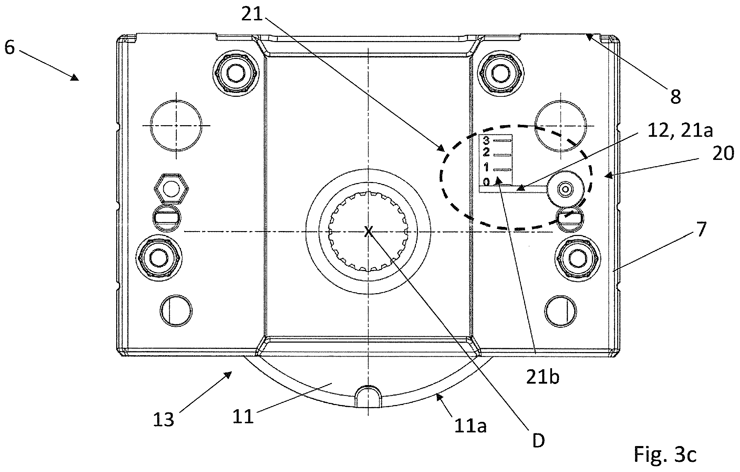

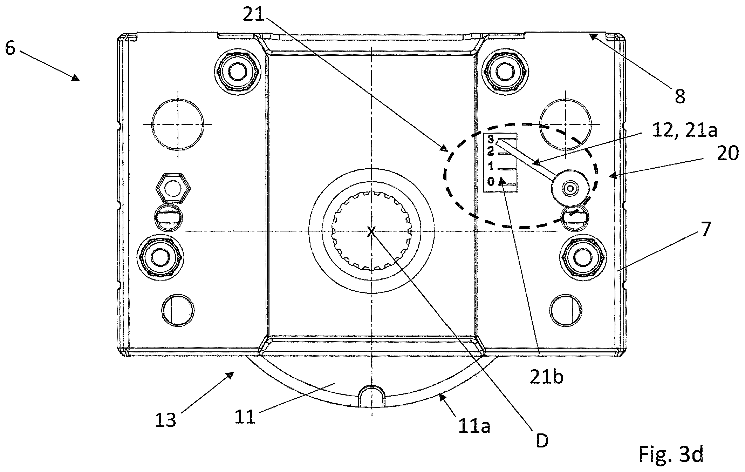

Die Figuren 3a und 3b sowie 3e und 3f unterscheiden sich von den Figuren 3c und 3d lediglich dadurch, dass die optische Anzeige 21 an unterschiedlichen Seiten des Gehäuses 7 angeordnet sind und durch eine unterschiedliche Anordnung der Skala 21b, der Ablesepunkte und des Zeigers 21a zueinander. Dabei entsprechen die Figuren 3a und 3b den Figuren 3e und 3f mit Ausnahme der umgekehrten Anordnung der Ablesepunkte. In den Figuren 3b und 3c sowie 3e ist jeweils eine auf den Ablesepunkt "0" gerichtete Stellung des Zeigers 21a dargestellt, wohingegen der Zeiger 21a in den Figuren 3a und 3d sowie 3f auf den Ablesepunkt "3" zeigt. Je nach vorab erfolgter Festlegung kann die Zahl "0" somit minimalen (Figur 3e) oder maximalen (Figur 3b) Verschleiß anzeigen, wobei entsprechendes umgekehrt bei Anzeige der Zahl "3" gilt. Es ist möglich, dass sich der Fühler 22 und der Zeiger 21a dabei in unterschiedliche Richtungen erstrecken.

### Bezugszeichenliste

- 1: Laufkran
- 2: Kastenträger
- 3: Laufkatze
- 4: Hebezeug
- 5: Fahrwerksträger
- 6: Laufradblock
- 7: Gehäuse
- 8: Anschlussfläche
- 9: Anschlussbohrung
- 10: Elektromotor
- 11: Laufrad
- 11a: Lauffläche
- 12: Betätigungselement
- 13: Unterseite
- 14: Federelement
- 20: Vorrichtung
- 21: optische Anzeige
- 21a: Zeiger
- 21b: Skala
- 22: Fühler
- 22a: freies Ende
- 23: Stift
- 24: Öffnung
- 25: Mutter
- 100: Schiene

- D: Drehachse
- k: Katzfahrrichtung
- K: Kranfahrrichtung

## Patentansprüche

1. Radsystem mit einem Laufrad (11) und einem das Laufrad (11) zumindest teilweise umschließenden Tragkörper, in dem das Laufrad (11) gelagert ist und aus dem das Laufrad (11) heraus ragt, um mit einer Schiene (100) in Kontakt zu treten, **dadurch gekennzeichnet, dass** eine mechanische Vorrichtung (20) zur Erkennung und/oder Ermittlung von Verschleiß an dem Laufrad (11) am Tragkörper gelagert ist, wobei die mechanische Vorrichtung (20) einen Fühler (22) aufweist, welcher in Kontakt mit dem Laufrad (11) bringbar ist, um zur Erkennung und/oder Ermittlung von Verschleiß an einer Lauffläche (11a) des Laufrades (11) anzuliegen, wobei die mechanische Vorrichtung (20) eine optische Anzeige (21) umfasst, welche außerhalb des Tragkörpers angeordnet ist und einen Zeiger (21a) umfasst, welcher mit dem Fühler (22) über ein Verbindungselement starr verbunden ist und einen beweglichen Teil der mechanischen Vorrichtung (20) ausbildet.

2. Radsystem nach Anspruch 1, **dadurch gekennzeichnet, dass** der Fühler (22) mit dessen freiem Ende (22a), vorzugsweise aus einer vom Laufrad (11) entfernten Bereitschaftsstellung, in Kontakt mit dem Laufrad (11) bringbar ist, um zur Erkennung und/oder Ermittlung von Verschleiß an einer Lauffläche (11a) des Laufrades (11) anzuliegen.

3. Radsystem nach Anspruch 1 oder 2, **dadurch gekennzeichnet, dass** der Zeiger (21a) mit dem Fühler (22) über das Verbindungselement mittels eines Stabes oder Stiftes (23) starr verbunden ist.

4. Radsystem nach einem der vorhergehenden Ansprüche, **dadurch gekennzeichnet, dass** der bewegliche Teil der mechanischen Vorrichtung (20) an dem Tragkörper drehbar und/oder translatorisch beweglich gelagert ist.

5. Radsystem nach einem der Ansprüche 2 bis 4, **dadurch gekennzeichnet, dass** der bewegliche Teil der mechanischen Vorrichtung (20) gegenüber dem Tragkörper, insbesondere kraftschlüssig und/oder formschlüssig, arretierbar ist, um den Fühler (22) in der vom Laufrad (11) entfernten Bereitschaftsstellung zu halten.

6. Radsystem nach einem der vorherigen Ansprüche, **dadurch gekennzeichnet, dass** der Tragkörper als Gehäuse (7) ausgebildet ist, das mehrere, vorzugsweise fünf, das Laufrad umschließende Seitenwände aufweist.

7. Radsystem nach einem der Ansprüche 1 bis 6, **dadurch gekennzeichnet, dass** der Tragkörper Teil, insbesondere tragendes Strukturteil, eines Fahrwerksträgers (5) ist.

8. Radsystem nach einem der Ansprüche 1 bis 6, **dadurch gekennzeichnet, dass** der Tragkörper eine Anschlussfläche (8) aufweist, um hierüber an einen Fahrwerksträger (5) angeschlossen zu werden.

9. Kran, insbesondere Laufkran (1), insbesondere Brückenkran oder Portalkran, mit einem Radsystem nach einem der vorherigen Ansprüche.

## Claims

1. A wheel system having a running wheel (11) and a support body which at least partially surrounds the running wheel (11) and in which the running wheel (11) is mounted and from which the running wheel (11) projects in order to come into contact with a rail (100), **characterized in that** a mechanical device (20) for detecting and/or determining wear on the running wheel (11) is mounted on the support body, wherein the mechanical device (20) has a probe (22) which can be brought into contact with the running wheel (11) in order to abut on a running surface (11a) of the running wheel (11) in order to detect and/or determine wear, wherein the mechanical device (20) comprises a visual indicator (21) which is arranged outside the support body and comprises a pointer (21a) which is rigidly connected to the probe (22) via a connecting element, and forms a movable part of the mechanical device (20).

2. The wheel system according to claim 1, **characterized in that** the probe (22), by its free end (22a), preferably from a standby position remote from the running wheel (11), can be brought into contact with the running wheel (11) in order to abut on a running surface (11a) of the running wheel (11) in order to detect and/or determine wear.

3. The wheel system according to claim 1 or 2, **characterized in that** the pointer (21a) is rigidly connected to the probe (22) via the connecting element by means of a rod or pin (23).

4. The wheel system according to any of the preceding claims, **characterized in that** the movable part of the mechanical device (20) is rotatably and/or translationally movably mounted on the support body.

5. The wheel system according to any of claims 2 to 4, **characterized in that** the movable part of the mechanical device (20) can be locked in relation to the support body, in particular with a non-positive and/or positive connection, in order to hold the probe (22) in the standby position remote from the running wheel (11).

6. The wheel system according to any of the preceding claims, **characterized in that** the support body is designed as a housing (7) which has a plurality of, preferably five, side walls surrounding the running wheel.

7. The wheel system according to any of claims 1 to 6, **characterized in that** the support body is a part, in particular a supporting structural part, of a carriage support (5).

8. The wheel system according to any of claims 1 to 6, **characterized in that** the support body has a connecting surface (8) in order to thereby be connected to a carriage support (5).

9. A crane, in particular, an overhead traveling crane (1), in particular a bridge crane or gantry crane, having a wheel system according to any of the preceding claims.

## Revendications

1. Système à roue comprenant une roue (11) et un corps de support entourant au moins partiellement la roue (11), système dans lequel la roue (11) est montée et duquel la roue (11) fait saillie pour venir en contact avec un rail (100), **caractérisé en ce qu'**un dispositif mécanique (20) de détection et/ou de détermination d'usure de la roue (11) est monté sur le corps de support, le dispositif mécanique (20) comportant un capteur (22) qui peut être amené en contact avec la roue (11) pour s'appuyer sur une surface de roulement (11a) de la roue (11) afin de détecter et/ou déterminer l'usure, le dispositif mécanique (20) comprenant un affichage optique (21) qui est disposé à l'extérieur du corps de support et qui comprend une aiguille (21a) reliée rigidement au capteur (22) par le biais d'un élément de liaison et formant une partie mobile du dispositif mécanique (20).

2. Système à roue selon la revendication 1, **caractérisé en ce que** le capteur (22) peut être amené par son extrémité libre (22a) en contact avec la roue (11), de préférence depuis une position d'attente éloignée de la roue (11), afin de s'appuyer sur une surface de roulement (11a) de la roue (11) pour détecter et/ou déterminer l'usure.

3. Système à roue selon la revendication 1 ou 2, **caractérisé en ce que** l'aiguille (21a) est reliée rigidement au capteur (22) par le biais de l'élément de liaison au moyen d'une tige ou d'une broche (23).

4. Système à roue selon l'une des revendications précédentes, **caractérisé en ce que** la partie mobile du dispositif mécanique (20) est montée sur le corps de support de manière à pouvoir être déplacée en rotation et/ou en translation.

5. Système à roue selon l'une des revendications 2 à 4, **caractérisé en ce que** la partie mobile du dispositif mécanique (20) peut être bloquée par rapport au corps de support, notamment par verrouillage en force et/ou par complémentarité de formes, afin de maintenir le capteur (22) en position d'attente éloignée de la roue (11).

6. Système à roue selon l'une des revendications précédentes, **caractérisé en ce que** le corps de support est conçu comme un boîtier (7) qui comporte plusieurs parois latérales, de préférence cinq, entourant la roue.

7. Système à roue selon l'une des revendications 1 à 6, **caractérisé en ce que** le corps de support est une partie, notamment une pièce structurelle porteuse, d'un support de mécanisme de roulement (5).

8. Système à roue selon l'une des revendications 1 à 6, **caractérisé en ce que** le corps de support présente une surface de liaison (8) afin d'être relié à un support de mécanisme de roulement (5).

9. Grue, en particulier grue roulante (1), en particulier grue à pont roulant ou grue à portique, comprenant un système à roue selon l'une des revendications précédentes.
